# EUROPÄISCHE PATENTSCHRIFT

(11) **EP 2 569 956 B1**
(45) Veröffentlichungstag und Bekanntmachung des Hinweises auf die Patenterteilung: **07.10.2015**
(21) Anmeldenummer: 11745777.0
(22) Anmeldetag: 17.08.2011
(51) Int. Cl.: H02J 7/00, H04R 25/00

(54) **HÖRGERÄT MIT EINER BATTERIELADE**
HEARING AID HAVING A BATTERY HOLDER
PROTHÈSE AUDITIVE COMPORTANT UN TIROIR À PILE

(30) Priorität: 16.09.2010 DE 102010040930
(43) Veröffentlichungstag der Anmeldung: 20.03.2013
(73) Patentinhaber: Siemens Medical Instruments Pte. Ltd., Singapore 139959 (SG)
(72) Erfinder: BARTH, Joachim, Roland, 90408 Nürnberg (DE); BEYFUSS, Stefanie, 91058 Erlangen (DE); SAUER, Joseph, 96129 Strullendorf (DE)
(74) Vertreter: FDST Patentanwälte
(86) Internationale Anmeldenummer: PCT/EP2011/064181
(87) Internationale Veröffentlichungsnummer: WO 2012/034815

(56) Entgegenhaltungen:
- EP-A2- 0 341 902
- WO-A1-2009/118047

## Beschreibung

Die vorliegende Erfindung betrifft ein Hörgerät mit einer Batterielade mit einer Öffnung zur Aufnahme eines Programmiermoduls mit ersten Programmierkontakten, sowie mit zweiten Programmierkontakten.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

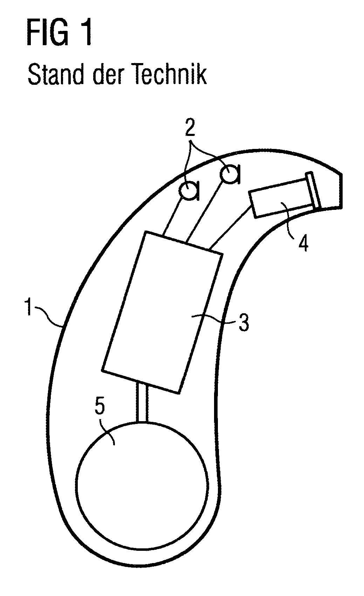

Hörgeräte besitzen prinzipiell als wesentliche Komponenten einen Eingangswandler, einen Verstärker und einen Ausgangswandler. Der Eingangswandler ist in der Regel ein Schallempfänger, z.B. ein Mikrofon, und/oder ein elektromagnetischer Empfänger, z.B. eine Induktionsspule. Der Ausgangswandler ist meist als elektroakustischer Wandler, z.B. Miniaturlautsprecher, oder als elektromechanischer Wandler, z.B. Knochenleitungshörer, realisiert. Der Verstärker ist üblicherweise in eine Signalverarbeitungseinheit integriert. Dieser prinzipielle Aufbau ist in Figur 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Energieversorgung des Hörgeräts und insbesondere die der Signalverarbeitungseinheit 3 erfolgt durch eine ebenfalls ins Hörgerätegehäuse 1 integrierte Batterie 5.

Hörgeräte sind in der Regel wahlweise mit nicht-aufladbaren oder mit aufladbaren Batterien zur Energieversorgung ausgestattet. Nicht-aufladbare Batterien sind regelmäßig durch aufgeladene Batterien zu ersetzen. Aufladbare Batterien müssen entweder aus der Batteriehaltevorrichtung entfernt und an eine Ladestation angeschlossen werden, oder sie können in der Batteriehaltevorrichtung verbleiben und induktiv oder galvanisch über Spulen oder Kontakte geladen werden. Die Batterien sind über Batteriekontakte, die in der Regel aus Metall bestehen, an die Signalverarbeitung angeschlossen. Aus der DE 19749 110 A1 ist ein Hörhilfegerät mit in einem Gehäuse angeordneten Funktionsteilen bekannt. Die Funktionsteile umfassen unter anderem ein Mikrofon, einen Hörer, ein Batteriefach mit Batteriefederkontakten und ein Hörgerätebuchsenteil mit elektrischen Steckerstiften. Die Batteriefederkontakte sind von außerhalb der Hörhilfe nicht zugänglich.

Aus der WO 2009/118047 ist ein Hörgerät mit Benutzersteuerung sowie entsprechendes Verfahren und entsprechende Benetzung bekannt.

Weiterhin weisen Hörgeräte oftmals Buchsen mit in der Regel ebenfalls metallenen Programmierkontakten auf, über die eine Datenübertragung von externen Programmiereinheiten, wie beispielsweise einem Computer, zur Programmierung und zur Einstellung von Parametern des Hörgerätes möglich ist. So beschreibt die Druckschrift EP 0 591 791 B1 ein programmierbares Hörhilfegerät, bei dem die Programmierkontakte durch eine Klappe abdeckbar sind.

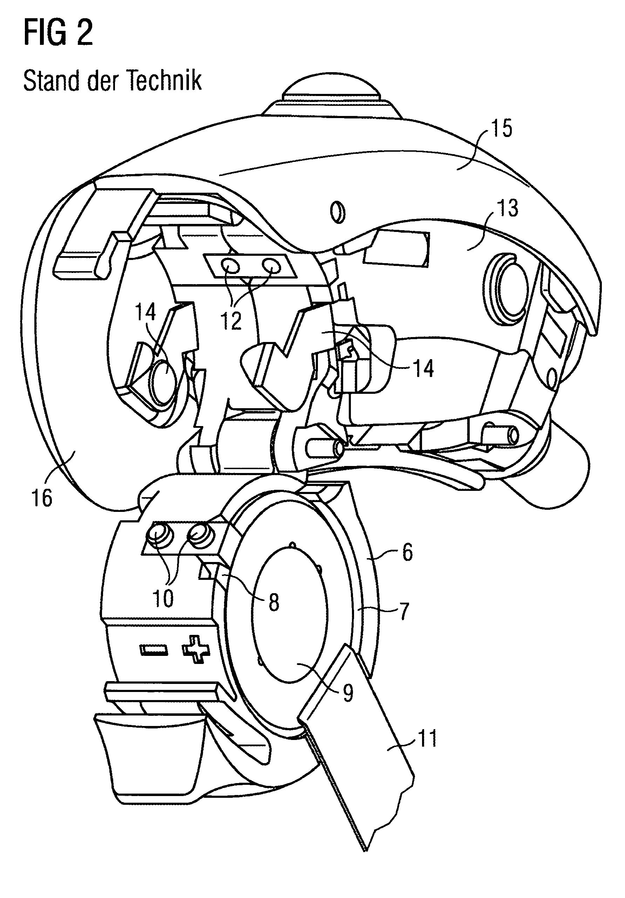

In neueren Hörgerätemodellen findet eine Platzoptimierung der Hörgerätekomponenten dahingehend statt, dass eine Batterielade zum Einsatz kommt, die im normalen Betriebsmodus eine Batterie zur Energieversorgung des Hörgerätes aufnehmen kann. Im Falle einer erforderlichen Programmierung des Hörgerätes beispielsweise durch einen Hörgeräteakustiker wird die Batterie aus der Batterielade entfernt und ein Programmiermodul eingesetzt. Figur 2 zeigt ein bekanntes Hörgerät mit einer ausgeklappten Batterielade 6, in die eine Aussparung 7 eingearbeitet ist. Im normalen Hörgerätebetrieb ist in die Aussparung 7 eine nicht gezeigte Batterie zur Energieversorgung des Hörgerätes eingesetzt. In der gezeigten Darstellung wurde aus der Aussparung 7 die Batterie entfernt und ein Programmiermodul 9 zum Zwecke der Programmierung des Hörgerätes eingesetzt. Das Programmiermodul 9 weist zwei erste Programmierkontakte 10 auf, die durch eine Öffnung 8 aus der Batterielade 6 heraustreten. Das Programmiermodul 6 umfasst ein Leitband 11, über welches das Hörgerät während des Programmiervorganges mit Strom versorgt wird und über welches die Programmiersignale übertragen werden.

Bei eingeklappter Batterielade 6 kontaktieren die ersten Programmierkontakte 10 zwei zweite Programmierkontakte 12, welche in einen Hörgeräterahmen 13 eingearbeitet sind. Der Hörgeräterahmen 13 umfasst weiterhin Batteriekontakte 14, die bei eingeklappter Batterielade 6 die Batterie bzw. das Programmiermodul 9 kontaktieren. Eine Deckschale 15 und eine Bodenschale 16, von welcher nur eine Hälfte dargestellt ist, umfassen den Hörgeräterahmen 13 bei eingeklappter Batterielade 6. Das Programmiermodul 9 wird gewöhnlich durch einen Akustiker in das Hörgerät zur Programmierung der individuell nötigen Einstellungen eingesetzt. Nach Abschluss der Programmierung wird das Programmiermodul 9 wieder entfernt. Der Endkunde erhält und benötigt das Programmiermodul 6 nicht.

Sowohl die zweiten Programmierkontakte, als auch die Batteriekontakte neigen zur Korrosion infolge von Schweiß und Hautpartikeln des Hörgeräteträgers beim Tragen des Hörgerätes. Um die Korrosionsanfälligkeit so weit wie möglich zu reduzieren, werden die Batteriekontakte und die zweiten Programmierkontakte vielfach mit Gold beschichtet. Derartige Kontakte sind jedoch verhältnismäßig teuer in der Herstellung. Außerdem kann durch die Goldbeschichtung nicht vollständig eine Korrosion verhindert werden.

Die Aufgabe der vorliegenden Erfindung besteht darin, die zweiten Programmierkontakte vor Korrosion zu schützen und gleichzeitig die Batterie zu fixieren.

Erfindungsgemäß wird diese Aufgabe gelöst durch ein Hörgerät nach dem Gegenstand des Anspruchs 1.

In einer Weiterbildung der Erfindung können die zweiten Programmierkontakte in einem Hörgeräterahmen angeordnet sein.

Im normalen Hörgerätebetrieb deckt das Dichtmittel die zweiten Programmierkontakte ab und schützt diese vor Korrosion. Für die Programmierung des Hörgerätes beim Akustiker wird das Dichtmittel entfernt und anschließend die Batterie aus der Batterielade des Hörgerätes entnommen. Vorteilhaft daran ist, dass dadurch im normalen Hörgerätebetrieb ein Schutz der zweiten Programmierkontakte vor Korrosion gegeben ist.

Des Weiteren kann die Oberfläche des Dichtmittels derart geformt sein, dass ein Werkzeug zum Einsetzen in oder Herauslösen aus der Öffnung der Batterielade ansetzbar ist. Damit können in vorteilhafter Weise die bekannten Werkzeuge zum Einfügen und Entfernen von Miniaturachsen (engl. Pins) in das bzw. aus dem Hörgerät angewendet werden, um das Dichtmittel zu entfernen und wieder einzusetzen. Diese Werkzeuge sind auch unter dem Begriff Pin Removal Tool bekannt.

Weiterhin kann das erste Teil aus einem harten Kunststoff gebildet sein. Dadurch wird es möglich, dass durch das erste Teil das Dichtmittel in der Öffnung gehalten wird.

Weiterhin kann das zweite Teil aus einem weichen Kunststoff gebildet sein. Dadurch wird in vorteilhafter Weise die erforderliche Flexibilität des Dichtmittels in dem Anteil, der die zweiten Programmierkontakte bedeckt, sichergestellt.

Des Weiteren kann in dem dritten Teil eine Feder zum Halten der Batterie ausgebildet sein. Dadurch wird in vorteilhafter Weise eine Fixierung einer in das Hörgerät eingesetzten Batterie ermöglicht.

In einer vorteilhaften Ausführungsform kann das dritte Teil aus einem weichen Kunststoff gebildet sein. Dies stellt die erforderliche Flexibilität des Dichtmittels in dem Anteil, der die Batterie in der Öffnung hält, sicher.

In einer vorteilhaften Ausprägung kann das Dichtmittel mit einem Mehrkomponentenspritzgussverfahren hergestellt sein. Dadurch wird es möglich, das Dichtmittel mit harten und weichen Anteilen herzustellen.

Weiterhin kann das Dichtmittel derart ausgebildet sein, dass das Dichtmittel beim Öffnen der Batterielade in Einrastpositionen bzw. Rasterpositionen des Hörgeräterahmens oder eines Hörgerätegehäuses einrastbar ist. Dadurch kann in vorteilhafter Weise die Position der Batterielade in Bezug auf den Hörgeräterahmen fixiert werden.

In einer weiteren Ausführungsform kann beim Öffnen der Batterielade der Kontakt mit der Batterie unterbrochen werden, in-dem mindestens ein Batteriekontakt von der Batterie abgehoben wird. Das Dichtmittel kann so ausgebildet sein, dass das Abheben des Batteriekontakts durch das Auflaufen auf das Dichtmittel bewirkt wird. Beim Schließen der Batterielade wird über manuellen Druck das Dichtmittel aus der Einrastposition geschoben und die Batterielade in das Gehäuse des Hörgerätes bewegt. Dadurch wird der Kontakt zwischen den Batteriekontakten und der Batterie hergestellt, und das Hörgerät wird über die Batterie wieder mit Spannung versorgt. Beim Öffnen und Schließen entsteht Reibung zwischen dem Hörgeräterahmen bzw. dem Hörgerätegehäuse und dem in der Batterielade befestigten Dichtmittel und damit Verschleiß insbesondere des weicheren Reibpartners. Zweckmäßigerweise wird das Dichtmittel als der weichere Reibpartner ausgelegt. Durch die erfindungsgemäße Ausbildung des Dichtmittels für Rasterzwecke zur Fixierung der Batterielade in Bezug auf den Hörgeräterahmen werden zukünftige Verschleißkosten reduziert und der Service vereinfacht, da im Verschleißfall nur das Dichtmittel, das geringe Herstellkosten aufweist und auf einfache Weise ausgetauscht werden kann, zu ersetzen ist.

In einer Weiterbildung der Erfindung kann die Farbe des Dichtmittels eine Hörgeräte-Links-Rechts Kennung angeben. Durch eine Farbmarkierung des Dichtmittels wird dem Träger der Hörvorrichtung ein Hinweis geliefert, hinter welchem Ohr das einzelne Hörgerät zu tragen ist. Eine bislang erforderliche separate Markierung in Form von an der Batterielade angebrachten beschrifteten Platten entfällt. Damit wird die Gefahr, dass zwei zu verwendende Hörgeräte beim Anbringen an bzw. im Ohr vertauscht werden, reduziert.

Weitere Vorteile, Merkmale und Einzelheiten der Erfindung ergeben sich aus dem im Folgenden beschriebenen Ausführungsbeispiel sowie anhand einer schematischen Zeichnung.

Es zeigen:
- Figur 1:: eine Prinzipdarstellung eines Hinter-dem-Ohr-Hörgerätes gemäß dem Stand der Technik,
- Figur 2:: eine perspektivische Ansicht eines Hinter-dem-Ohr-Hörgerätes mit ausgeklappter Batterieladegemäß dem Stand der Technik,
- Figur 3:: eine perspektivische Ansicht einer Batterielade mit eingesetztem Dichtmittel,
- Figur 4:: eine perspektivische Ansicht eines Dichtmittels,
- Figur 5:: eine perspektivische Ansicht einer Batterielade mit eingesetztem Dichtmittel und Werkzeug,
- Figur 6:: eine perspektivische Ansicht einer Batterielade mit eingesetztem Dichtmittel, und
- Figur 7:: eine perspektivische Ansicht einer Batterielade mit einer weiteren Ausführungsform eines eingesetzten Dichtmittels.

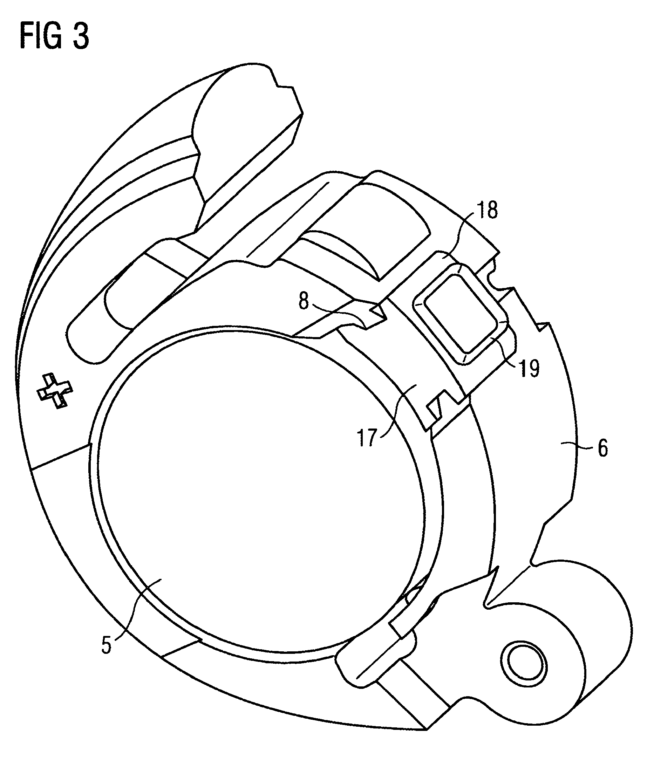

Figur 3 zeigt eine perspektivische Ansicht einer Batterielade mit einem eingesetzten Dichtmittel. Eine Batterielade 6 umfasst eine eingesetzte Batterie 5, sowie ein Dichtmittel 17, das in eine Öffnung 8 der Batterielade 6 eingesetzt ist. Das Dichtmittel 17 weist einen ersten Teil 18 auf, der aus einem harten Kunststoff gebildet ist. Über das erste Teil 18 wird das Dichtmittel 17 in der Batterielade 6 gehalten. Weiterhin weist das Dichtmittel 17 einen zweiten Teil 19 auf, das aus einem weichen Kunststoff gebildet ist. Über den zweiten Teil erfolgt die Abdichtung von nicht dargestellten zweiten Programmierkontakten, um diese vor Korrosion zu schützen.

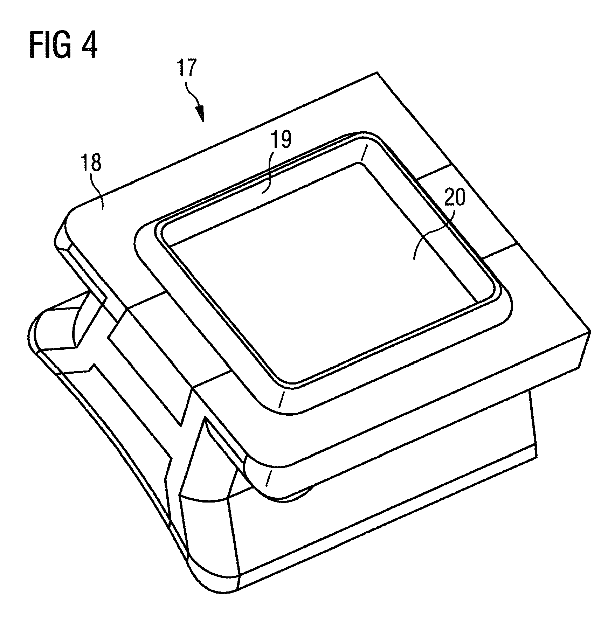

In Figur 4 ist ein Dichtmittel detailliert dargestellt. Das Dichtmittel 17 umfasst einen aus hartem Kunststoff bestehenden ersten Teil 18 und einen aus weichem Kunststoff hergestellten zweiten Teil 19. Der zweite Teil 19 weist eine Einbuchtung 20 auf. Diese dient der Aufnahme von nicht dargestellten zweiten Programmierkontakten nach Einklappen einer nicht gezeigten Batterielade, in welche das Dichtmittel 17 eingebracht wird. Durch den vollständigen Umschluss der zweiten Programmierkontakte durch die Einbuchtung 20 wird die Gefahr einer Korrosion der zweiten Programmierkontakte weitgehend reduziert.

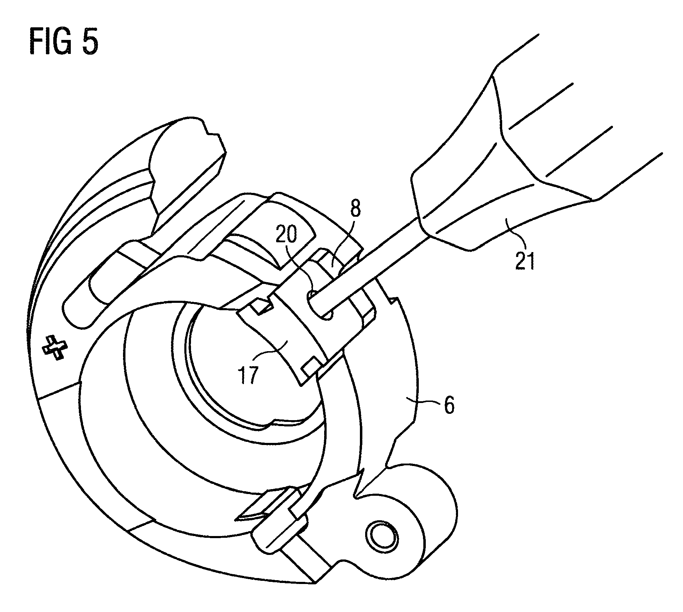

Figur 5 zeigt eine perspektivische Ansicht einer Batterielade mit eingesetztem Dichtmittel und eines Werkzeuges. In eine Batterielade 6 ist in eine Öffnung 8 ein Dichtmittel 17 eingesetzt, das eine Einbuchtung 20 aufweist. In die Einbuchtung 20 kann ein bekanntes Werkzeug 21 eingesetzt werden, um das Dichtmittel 17 aus der Öffnung 8 zu entfernen, beziehungsweise um es in die Öffnung 8 einzusetzen.

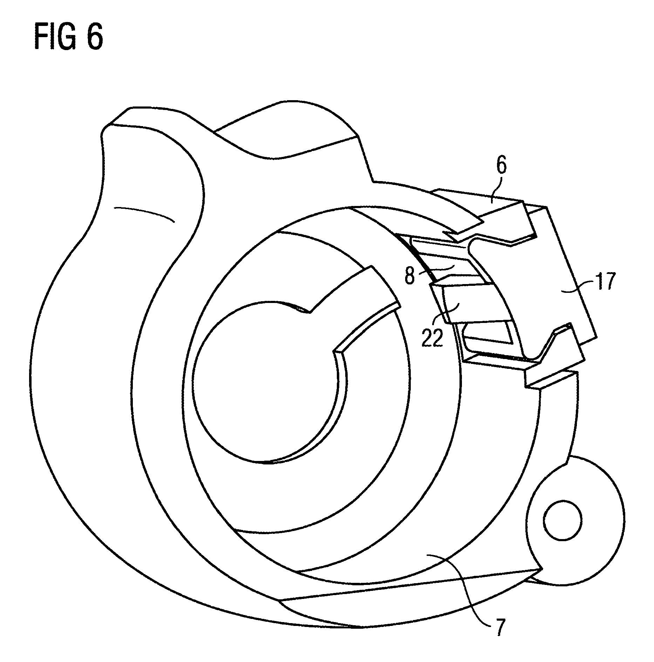

In Figur 6 ist eine perspektivische Ansicht einer Batterielade mit einem eingesetzten Dichtmittel dargestellt. In eine Batterielade 6 ist in eine Öffnung 8 ein Dichtmittel 17 eingesetzt, das ein drittes Teil 22 in Form einer Feder umfasst. Über das dritte Teil 22 kann eine nicht gezeigte Batterie, die in eine Aussparung 7 der Batterielade 6 eingesetzt ist, gehalten werden. Ein Einsetzen der Batterie in die Aussparung 7 kann wahlweise durch manuelles Drücken der Batterie über den dritten Teil 22 des bereits in die Öffnung 8 eingesetzten Dichtmittels 17 erfolgen. Alternativ kann die Batterie in die Aussparung 7 eingelegt werden und anschließend mithilfe eines nicht gezeigten Werkzeuges das Dichtmittel 17 in die Öffnung 8 der Batterielade 20 geschoben werden. Das als Feder ausgeprägte dritte Teil 22 fixiert die Batterie in der Aussparung 7.

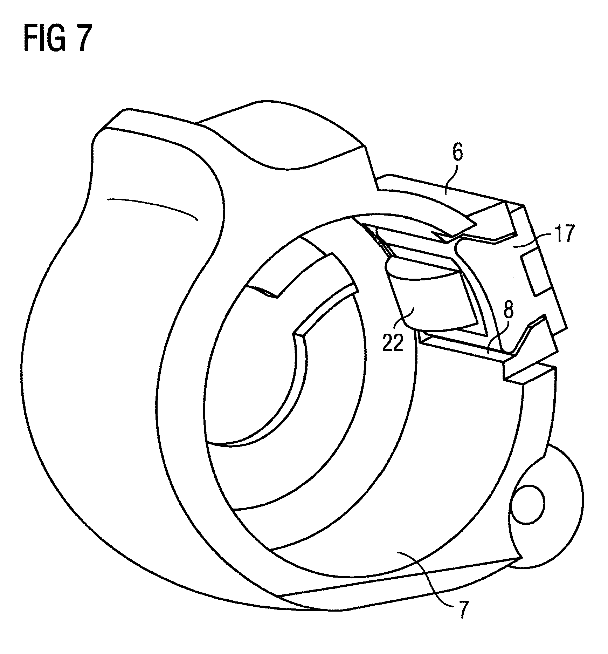

Figur 7 zeigt eine perspektivische Ansicht einer Batterielade mit einer weiteren Ausführungsform eines eingesetzten Dichtmittels. In eine Batterielade 6 ist in eine Öffnung 8 ein Dichtmittel 17 eingesetzt, das ein halbzylinderförmiges drittes Teil 22 aus elastischem Kunststoff umfasst. Ein Einsetzen einer nicht gezeigten Batterie in die Aussparung 7 der Batterielade 6 kann wahlweise durch manuelles Drücken der Batterie über das verformbare dritte Teil 22 eines bereits in die Öffnung 8 eingesetzten Dichtmittels 17 erfolgen. Alternativ kann die nicht gezeigte Batterie in die Aussparung 7 eingelegt werden und anschließend mithilfe eines nicht gezeigten Werkzeuges das Dichtmittel 17 in die Öffnung 8 der Batterielade 6 geschoben werden. Im eingesetzten Zustand wird die Batterie durch das dritte Teil 22 fixiert.

### Bezugszeichenliste

- 1: Hörgerätegehäuse
- 2: Mikrofone
- 3: Signalverarbeitungseinheit
- 4: Lautsprecher bzw. Hörer
- 5: Batterie
- 6: Batterielade
- 7: Aussparung
- 8: Öffnung
- 9: Programmiermodul
- 10: erste Programmierkontakte
- 11: Leitband
- 12: zweite Programmierkontakte
- 13: Hörgeräterahmen
- 14: Batteriekontakte
- 15: Deckschale
- 16: Bodenschale
- 17: Dichtmittel
- 18: erstes Teil eines Dichtmittels
- 19: zweites Teil eines Dichtmittels
- 20: Einbuchtung
- 21: Werkzeug
- 22: drittes Teil eines Dichtmittels

## Patentansprüche

1. Hörgerät
- mit einer Batterielade (6) mit einer Öffnung (8) zur Aufnahme einer Batterie (5) oder eines Programmiermoduls (9) mit ersten Programmierkontakten (10), und
- mit zweiten Programmierkontakten (12),
- mit einem in die Öffnung (8) lösbar eingesetzten Dichtmittel (17), **dadurch gekennzeichnet, dass** das Dichtmittel bei geschlossener Batterielade (6) die zweiten Programmierkontakte (12) abdeckt und die in die Batterielade (6) eingesetzte Batterie (5) hält, wobei das Dichtmittel (17) ein erstes (18), ein zweites (19) und ein drittes Teil (22) aufweist, wobei das erste Teil (18) ausgebildet ist, das Dichtmittel (17) in der Öffnung (8) zu halten und wobei das zweite Teil (19) ausgebildet ist, die zweiten Programmierkontakte (12) abzudecken
und wobei das dritte Teil (22) ausgebildet ist, die in der Batterielade (6) eingesetzte Batterie (5) zu halten.

2. Hörgerät nach Anspruch 1
**dadurch gekennzeichnet,**
**dass** die zweiten Programmierkontakte (12) in einem Hörgeräterahmen (13) angeordnet sind.

3. Hörgerät nach einem der vorherigen Ansprüche,
**dadurch gekennzeichnet,**
**dass** die Oberfläche des Dichtmittels (17) derart geformt ist, dass ein Werkzeug (21) zum Einsetzen in oder Herauslösen aus der Öffnung (8) der Batterielade (6) ansetzbar ist.

4. Hörgerät nach einem der vorherigen Ansprüche,
**dadurch gekennzeichnet,**
**dass** das erste Teil (18) aus einem harten Kunststoff gebildet ist.

5. Hörgerät nach einem der vorherigen Ansprüche,
**dadurch gekennzeichnet,**
**dass** das zweite Teil (19) aus einem weichen Kunststoff gebildet ist.

6. Hörgerät nach einem der vorherigen Ansprüche,
**dadurch gekennzeichnet,**
**dass** in dem dritten Teil (22) eine Feder zum Halten der Batterie (5) ausgebildet ist.

7. Hörgerät nach einem der vorherigen Ansprüche,
**dadurch gekennzeichnet,**
**dass** das dritte Teil (22) aus einem weichen Kunststoff gebildet ist.

8. Hörgerät nach einem der vorherigen Ansprüche,
**dadurch gekennzeichnet,**
**dass** das Dichtmittel (17) mit einem Mehrkomponentenspritzgussverfahren hergestellt ist.

9. Hörgerät nach den Ansprüchen 2 - 13,
**dadurch gekennzeichnet,**
**dass** das Dichtmittel (17) beim Öffnen der Batterielade (6) in Einrastpositionen des Hörgeräterahmens (13) oder eines Hörgerätegehäuses einrastbar ist.

10. Hörgerät nach einem der vorherigen Ansprüche,
**dadurch gekennzeichnet,**
**dass** das Dichtmittel (17) beim Öffnen der Batterielade (6) den Kontakt zur Batterie (5) unterbricht.

11. Hörgerät nach einem der vorherigen Ansprüche,
**dadurch gekennzeichnet,**
**dass** die Farbe des Dichtmittels (17) eine Hörgeräte-Links-Rechts Kennung angibt.

## Claims

1. Hearing aid
- having a battery holder (6) with an opening (8) for receiving a battery (5) or a programming module (9) with first programming contacts (10), and
- having second programming contacts (12),
- having a sealing means (17) inserted releasably into the opening (8), **characterized in that**, when the battery holder (6) is closed, the sealing means covers the second programming contacts (12) and holds the battery (5) inserted into the battery holder (6), wherein the sealing means (17) has a first part (18), a second part (19) and a third part (22), wherein the first part (18) is designed to hold the sealing means (17) in the opening (8), and wherein the second part (19) is designed to cover the second programming contacts (12), and wherein the third part (22) is designed to hold the battery (5) inserted in the battery holder (6).

2. Hearing aid according to Claim 1, **characterized in that** the second programming contacts (12) are arranged in a hearing aid frame (13).

3. Hearing aid according to one of the preceding claims, **characterized in that** the surface of the sealing means (17) is shaped in such a way that a tool (21) can be applied for insertion into or removal from the opening (8) of the battery holder (6).

4. Hearing aid according to one of the preceding claims, **characterized in that** the first part (18) is formed from a hard plastic.

5. Hearing aid according to one of the preceding claims, **characterized in that** the second part (19) is formed from a soft plastic.

6. Hearing aid according to one of the preceding claims, **characterized in that** a spring for holding the battery (5) is formed in the third part (22).

7. Hearing aid according to one of the preceding claims, **characterized in that** the third part (22) is formed from a soft plastic.

8. Hearing aid according to one of the preceding claims, **characterized in that** the sealing means (17) is produced by a multi-component injection moulding method.

9. Hearing aid according to Claims 2 - 13, **characterized in that** the sealing means (17) can engage in latching positions of the hearing aid frame (13) or of a hearing aid housing when the battery holder (6) is opened.

10. Hearing aid according to one of the preceding claims, **characterized in that** the sealing means (17) interrupts the contact to the battery (5) when the battery holder (6) is opened.

11. Hearing aid according to one of the preceding claims, **characterized in that** the colour of the sealing means (17) provides a hearing aid left/right identification.

## Revendications

1. Appareil auditif
- comportant un compartiment à pile (6) avec une ouverture (8) pour recevoir une pile (5) ou un module de programmation (9) avec des premiers contacts de programmation (10), et
- avec des deuxièmes contacts de programmation (12),
- avec un moyen d'étanchéité (17) inséré de manière amovible dans l'ouverture (8), **caractérisé en ce que** le moyen d'étanchéité recouvre les deuxièmes contacts de programmation (12) quand le compartiment à pile (6) est fermé et maintient la pile (5) insérée dans le compartiment à pile (6), dans lequel le moyen d'étanchéité (17) présente une première (18), une deuxième (19) et une troisième partie (22), dans lequel la première partie (18) est conçue de manière à maintenir le moyen d'étanchéité (17) dans l'ouverture (8) et dans lequel la deuxième partie (19) est conçue afin de recouvrir les deuxièmes contacts de programmation (12)
et dans lequel la troisième partie (22) est conçue de manière à maintenir la pile (5) insérée dans le compartiment à pile (6).

2. Appareil auditif selon la revendication 1,
**caractérisé en ce**
**que** les deuxièmes contacts de programmation (12) sont disposés dans un châssis d'appareil auditif (13).

3. Appareil auditif selon une des revendications précédentes,
**caractérisé en ce**
**que** la surface du moyen d'étanchéité (17) est façonnée de telle sorte qu'un outil (21) puisse être employé pour effectuer une insertion dans ou un retrait de l'ouverture (8) du compartiment à pile (6).

4. Appareil auditif selon une des revendications précédentes,
**caractérisé en ce**
**que** la première partie (18) est façonnée dans un plastique dur.

5. Appareil auditif selon une des revendications précédentes,
**caractérisé en ce**
**que** la deuxième partie (19) est façonnée dans un plastique tendre.

6. Appareil auditif selon une des revendications précédentes,
**caractérisé en ce**
**que** dans la troisième partie (22) un ressort pour maintenir la pile (5) est réalisé.

7. Appareil auditif selon une des revendications précédentes,
**caractérisé en ce**
**que** la troisième partie (22) est façonnée dans un plastique tendre.

8. Appareil auditif selon une des revendications précédentes,
**caractérisé en ce**
**que** le moyen d'étanchéité (17) est fabriqué avec un procédé de moulage par injection multi-composant.

9. Appareil auditif selon les revendications 2 - 13,
**caractérisé en ce**
**que** le moyen d'étanchéité (17) lors de l'ouverture du compartiment à pile (6) peut être encliqueté dans des positions d'encliquetage du châssis d'appareil auditif (13) ou d'un boîtier d'appareil auditif.

10. Appareil auditif selon une des revendications précédentes,
**caractérisé en ce**
**que** le moyen d'étanchéité (17) rompt le contact avec la pile (5) lors de l'ouverture du compartiment à pile (6).

11. Appareil auditif selon une des revendications précédentes,
**caractérisé en ce**
**que** la couleur du moyen d'étanchéité (17) permet de distinguer l'appareil auditif gauche de l'appareil auditif droite.
